Europäisches Patentamt

European Patent Office

Office européen des brevets

(19)

(11) Numéro de publication: **0 125 187**
**B1**

(12) **FASCICULE DE BREVET EUROPEEN**

(45) Date de publication du fascicule du brevet: **16.08.90**

(51) Int. Cl.⁵: **G 06 K 7/016**

(21) Numéro de dépôt: **84400926.6**

(22) Date de dépôt: **04.05.84**

(54) **Perfectionnements aux procédés et dispositifs de lecture des cartes magnétiques de contrôle d'accès ou analogues.**

(30) Priorité: **06.05.83 FR 8307626**

(43) Date de publication de la demande:
**14.11.84 Bulletin 84/46**

(45) Mention de la délivrance du brevet:
**16.08.90 Bulletin 90/33**

(84) Etats contractants désignés:
**CH DE GB IT LI**

(56) Documents cités:
**US-A- 605 810**
**US-A-3 959 626**
**US-A-3 978 319**
**US-A-4 096 378**

(73) Titulaire: **Lewiner, Jacques**
**5, rue Bory d'Arnex**
**F-92210 Saint-Cloud (FR)**
(73) Titulaire: **Hennion, Claude**
**18, rue Flatters**
**F-75005 Paris (FR)**

(72) Inventeur: **Lewiner, Jacques**
**5, rue Bory d'Arnex**
**F-92210 Saint-Cloud (FR)**
Inventeur: **Hennion, Claude**
**18, rue Flatters**
**F-75005 Paris (FR)**

(74) Mandataire: **Behaghel, Pierre et al**
**CABINET PLASSERAUD 84 rue d'Amsterdam**
**F-75009 Paris (FR)**

Courier Press, Leamington Spa, England.

**Description**

L'invention est relative aux procédés et dispositifs destinés à la lecture de suites codées de signaux magnétiques enregistrées sur des supports appropriés tels que des cartes servant à contrôler des accès, lesdites suites étant composées de bits de durées identiques dont les lectures se traduisent respectivement, pour les uns—qui seront supposés être des 0 dans la suite—, par un changement de niveau unique d'une tension électrique ou autre paramètre donné et, pour les autres—qui seront supposés être des 1—, par deux changements de niveau dudit paramètre régulièrement répartis dans le temps.

De telles suites connues sont parfois désignées sous l'appellation de suites "à doublement de fréquence" F2F.

Les supports magnétiques du genre considéré—qui seront appelés "cartes" dans la suite pour simplifier, mais de façon bien entendu non limitative car il pourrait s'agir d'autres supports que des cartes, tels que des clés plates, des tiges, ... —servent par exemple à commander le déverrouillage de portes livrant accès à des enceintes contrôlées telles que es armoires contenant des pupitres de commande de distributeurs de billets, des garages, des chambres d'hôtel ....

Pour que la lecture des suites magnétiques codées enregistrées sur ces cartes soit correcte, il est nécessaire, dans les modes de réalisation actuels, de tenir compte de la vitesse de défilement des cartes à lire devant les têtes de lecture.

En effet, dans le cas contraire, la lecture peut être faussée à la suite d'un changement de vitesse trop important de l'introduction de la carte à traiter dans l'appareil de lecture: un tel changement de vitesse, pouvant aller jusqu'à l'arrêt provisoire intégral du mouvement d'introduction, est par exemple dû à l'hésitation du porteur de la carte sur le mode d'emploi exact de cette dernière.

A cet effet il a déjà été proposé de prévoir:
—soit des moyens d'entraînement à moteur agencés de façon à happer la carte introduite dans l'appareil de lecture et à lui imposer une vitesse d'introduction constante,
—soit des moyens tachymétriques propres à détecter à chaque instant la vitesse réelle de l'introduction de la carte et à élaborer des signaux appropriés propres à compenser automatiquement les variations de cette vitesse.

Ces moyens sont coûteux et encombrants.

Pour supprimer la nécessité du recours à de tels moyens, il a également été proposé par les brevets US 3 959 626 et 4 096 378 de mesurer la durée réelle globale de chaque bit lu et de régler l'instant de l'identification aux fins de lecture de chaque bit en fonction de la durée réelle globale du bit précédent ou des durées réelles globales des deux bits précédents.

Un tel procédé permet de tenir compte automatiquement des valeurs et variations de la vitesse de défilement des cartes devant les têtes de lecture.

Mais ce procédé ne tient aucun compte du contenu (0 ou 1) de ces bits précédents, un tel contenu d'étant pris en considération, selon les brevets considérés, que pour compenser, lors de la lecture de chaque signal codé enregistré sur la carte, un éventuel "étalement" de ce signal dû par exemple à des bavures d'impression.

Or les demandeurs ont découvert qu'en raison des formes particulières des signaux de lecture des bits successifs et de leurs déformations subséquentes dans les moyens d'amplification et de mise en forme des appareils de lecture, l'instant où l'identification de chaque bit est optimale, c'est-à-dire réunit le plus grand nombre de chances d'identifier correctement le bit en cours de lecture, n'est pas le même selon que le bit précédemment lu était un 0 ou un 1 et même, dans le cas où ce bit précédemment lu était un 0, selon que le bit précédant ce 0 était lui-même un 0 ou un 1.

C'est ainsi que, contrairement à ce qu'enseignait l'art antérieur, le temps $T$ séparant la fin de la lecture d'un bit quelconque donné, de durée $t_0$, -appelé "bit précédent" ci-après- et l'instant d'identification optimal du bit suivant n'est pas égal à 0,75 $t_0$, valeur pour laquelle ledit instant aurait été situé exactement à mi-distance de 0,5 $t_0$ et de $t_0$.

On donne à ce temps $T$, selon l'invention,
—si ledit bit précédent est un 1, une valeur $T_1$ comprise entre 0,6 $t_0$ et 0,75 $t_0$, borne supérieure exclue,
—et si ledit bit précédent est un 0, une valeur $T_0$ qui est
—ou bien comprise entre 0,75 $t_0$ et 0,9 $t_0$, borne inférieure exclue,
—ou bien égale à l'une ou l'autre des deux valeurs 13/16 de $t_0$ et 15/16 de $t_0$ selon que le bit précédant le susdit 0 précédent est encore un 0 ou est un 1.

Dans des modes de réalisation intéressants,
—la valeur $T_1$ est égale à 5/8 de $t_0$ ou à 11/16 de $t_0$,
—la valeur $T_0$ est égale à 7/8 de $t_0$.

Les solutions faisant intervenir des 1/8 sont les plus simples et les solutions faisant intervenir les 1/16 sont les plus fiables.

Dans ces conditions, la lecture de chaque suite de bits enregistrés magnétiquement sur une carte donne lieu aux opérations suivantes:
—lecture de chaque bit assurée de façon d'une part à identifier la nature de ce bit et d'autre part à mesurer sa durée réelle,
—détermination automatique, selon les lois mentionnées ci-dessus, de l'instant d'identification de chaque bit en fonction de la durée et de la nature du bit qui le précède et éventuellement en outre de la nature du bit précédant ce dernier.

La lecture correcte des débuts des suites codées de bits à lire est assurée par le fait que chacune de ces suites commence par une succession de bits identiques de nature prédéterminée, notamment une succession de 0, ce qui permet de déterminer avec exactitude la durée $t_0$ de départ.

Bein entendu, les appareils de lecture destinés à mettre en oeuvre les procédés définis ci-dessus comprennent les moyens nécessaires pour mesurer les durées réelles des différents bits et pour assurer l'identification de chaque bit à l'instant défini selon les lois ci-dessus, en fonction de la durée du bit précédent et de la nature de ce bit précédent et éventuellement en outre de la nature du bit précédant ledit bit précédent.

Les appareils de lecture en question sont associés à des moyens propres à comparer chaque suite de bits lue à une suite de référence préalablement mise en mémoire de façon à délivrer un signal de commande approprié lorsque cette comparaison révèle une identité entre la suite lue et la suite de référence.

Ce signal de commande, qui est par exemple une impulsion de tension ou de courant électrique, est exploité de toute façon désirable, notamment pour déverrouiller et éventuellement ouvrir une porte livrant accès à une enceinte contrôlée.

En suite de quoi, et quel que soit le mode de réalisation adopté, on dispose de moyens pour la lecture de suites magnétiques codées de bits du genre indiqué ci-dessus, moyens dont la constitution résulte suffisamment de ce qui précède.

Ces moyens présentent sur ceux antérieurement connus l'avantage capital d'assurer une lecture correcte quelles que soient la vitesse et les variations de vitesse des mouvements d'introduction des cartes porteuses de ces suites dans les appareils de lecture, et ce sans qu'il soit nécessaire de recourir à des moyens spéciaux d'entraînement desdites cartes et/ou de détection tachymétrique de leurs mouvements d'introduction.

Il est à noter à ce sujet quie, dans la pratique, les bits successifs, des suites codées à lire, qui sont enregistrés magnétiquement sur les cartes considérées, sont très proches les uns des autres de sorte que chaque variation de la vitesse d'introduction d'une telle carte ne peut pas concerner quelques bits seulement: chaque variation en question s'échelonne au contraire sur un grand nombre de bits successifs, ce qui lui confère une progressivité relativement lente de chaque bit au suivant et permet d'élaborer constamment des durées de bits moyennes correctes malgré les légères erreurs affectant les évaluations individuelles de ces durées, erreurs dues aux déformations des signaux de lecture.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

**Revendications**

1. Procédé pour lire, à l'aide d'une tête de lecture, des suites codées de signaux magnétiques enregistrées sur des cartes ou supports analogues défilant devant cette tête, suites composées de bits qui, lors d'un défilement uniforme devant la tête de lecture, ont des durées identiques et dont les lectures se traduisent respectivement, pour les uns—appelés 0 dans la suite—par un changement de niveau unique d'une tension électrique ou autre paramètre donné et, pour les autres—appelés 1 dans la suite—, par deux changements de niveau dudit paramètre régulièrement répartis dans le temps, selon lequel on mesure la durée réelle de chaque bit lu et on identifie ce bit, l'instant de l'identification de chaque bit étant réglé en fonction de la nature et de la durée réelle $t_0$ du "bit précédent", caractérisé en ce que l'on donne au temps T qui sépare la fin de la lecture de ce "bit précédent" et ledit instant d'identification,

—si le bit précédent est un 1, une valeur $T_1$ comprise entre $0,6\ t_0$ et $0,75\ t_0$, borne supérieure exclue,

—et si ledit bit précédent est un 0, une valeur $T_0$ comprise entre $0,75\ t_0$ et $0,9\ t_0$, borne inférieure exclue.

2. Procédé de lecture selon la revendication 1, caractérisé en ce que $T_0 = 7/8$ de $t_0$.

3. Procédé pour lire, à l'aide d'une tête de lecture, des suites codées de signaux magnétiques enregistrées sur des cartes ou supports analogues défilant devant cette tête, suites composées de bits qui, lors d'un défilement uniforme devant la tête de lecture, ont des durées identiques et dont les lectures se traduisent respectivement, pour les uns—appelés, 0 dans la suite—par un changement de niveau unique d'une tension électrique ou autre paramètre donné et, pour les autres—appelés 1 dans la suite—, par deux changements de niveau dudit paramètre régulièrement répartis dans le temps, selon lequel on mesure la durée réelle de chaque bit lu et on identifie ce bit, l'instant de l'identification de chaque bit étant réglé en fonction de la nature et de la durée réelle $t_0$ du "bit précédent", caractérisé en ce que l'on donne au temps T qui sépare la fin de la lecture de ce "bit précédent" et ledit instant d'identification,

—si le bit précédent est un 1, une valeur $T_1$ comprise entre $0,6\ t_0$ et $0,75\ t_0$, borne supérieure exclue,

—si ledit bit précédent est un 0, et si celui qui le précède est lui-même un 0, la valeur $T_0$ égale à $13/16$ de $t_0$,

—et si ledit bit précédent est un 0 et si celui qui le précède est un 1, la valeur $T_0$ égale à $15/16$ de $t_0$.

4. Procédé de lecture selon l'une quelconque des revendications 1 à 3, caractérisé en ce que $T_1 = 5/8$ de $t_0$.

5. Procédé de lecture selon l'une quelconque des revendications 1 à 3, caractérisé en ce que $T_1 = 11/16$ de $t_0$.

6. Appareil de lecture pour mettre en oeuvre le procédé selon la revendication 1, comprenant des moyens pour mesurer la durée réelle de chaque bit lu et des moyens pour identifier ce bit, l'instant de l'identification de chaque bit étant réglé en fonction de la nature et de la durée réelle $t_0$ du "bit précédent", caractérisé en ce que les moyens de réglage sont agencés de façon à donner au temps T séparant la fin de la lecture de ce "bit précédent" et ledit instant d'identification,

—si le bit précédent est un 1, une valeur $T_1$ comprise entre 0,6 et 0,75 $t_0$, borne supérieure exlue,

—et si ledit bit précédent est un 0, une valeur $T_0$ comprise entre 0,75 et 0,9 $t_0$, borne inférieure exclue.

7. Appareil de lecture selon la revendication 6, caractérisé en ce que $T_0$ est égal à 7/8 de $t_0$.

8. Appareil de lecture pour mettre en oeuvre le procédé selon la revendication 3, comprenant des moyens pour mesurer la durée réelle de chaque bit lu et des moyens pour identifier ce bit, l'instant de l'identification de chaque bit étant réglé en fonction de la nature et de la durée réelle $t_0$ du "bit précédent", caractérisé en ce que les moyens de réglage sont agencés de façon à donner au temps T séparant la fin de la lecture de ce "bit précédent" et ledit instant d'identification,

—si le bit précédent est un 1, une valeur $T_1$ comprise entre 0,6 et 0,75 $t_0$, borne supérieure exclue,

—si ledit bit précédent est un 0, et si celui qui le précède est lui-même un 0, la valeur $T_0$ égale à 13/16 de $t_0$,

—et si ledit bit précédent est un 0 et si celui qui le précède est un 1, la valeur $T_0$ égale à 15/16 de $t_0$.

9. Appareil de lecture selon l'une quelconque des revendications 6 à 8, caractérisé en ce que $T_1$ est égal à 5/8 de $t_0$.

10. Appareil de lecture selon l'une quelconque des revendications 6 à 8, caractérisé en ce que $T_1$ est égal à 11/16 de $t_0$.

**Patentansprüche**

1. Verfahren zum Lesen von codierten Folgen magnetischer Signale mittels eines Lesekopfs, welche auf Karten oder ähnliche Träger geschrieben sind, die an dem Kopf vorbeilaufen, wobei die Folgen aus Bits bestehen, die während eines gleichförmigen Vorbeilaufens an dem Lesekopf gleiche Zeitperioden haben, und bei deren Lesen sich jeweils für die eine—in der Folge mit 0 bezeichnet—eine einmalige Pegeländerung einer elektrischen Spannung oder eines anderen gegebenen Parameters ergibt, und für die anderen—in der Folge mit 1 bezeichneten—zwei Pegeländerungen dieses Parameters ergeben, die zeitlich regelmäßig verteilt sind, wobei man die Realzeitperiode jedes gelesenen Bits mißt und diese Bits identifiziert, und wobei der Identifikationszeitpunkt jedes Bits in Abhängigkeit von der Eigenheit und der tatsächlichen Zeitperiode $t_0$ des "vorangehenden Bits" gestellt wird, dadurch gekennzeichnet, daß man als Zeit T, welche das Leseende dieses "vorangehenden Bits" und den Identifikationszeitpunkt trennt,

—einen Wert $T_1$ nimmt, der zwischen 0,6 $t_0$ und 0.75 $t_0$, ausschließliche obere Grenze, liegt, wenn das vorangehende Bit eine 1 ist,

—und einen Wert $T_0$ nimmt, der zwischen 0,75 $t_0$ und 0,9 $t_0$, ausschließliche untere Grenze liegt, wenn das vorangehende Bit eine 0 ist.

2. Verfahren zum Lesen nach Anspruch 1, dadurch gekennzeichnet, daß $T_0$=7/8 von $t_0$ ist.

3. Verfahren zum Lesen von codierten Folgen von magnetischen Signalen mittels eines Lesekopfs, welche auf Karten oder ähnlichen Trägern geschrieben sind, die an dem Kopf vorbeilaufen, wobei die Folgen aus Bits bestehen, die während eines gleichförmigen Vorbeigangs an dem Lesekopf gleiche Zeitperioden haben und deren Lesen jeweils für die einen—in der Folge mit 0 bezeichnet—eine einmalige Pegeländerung einer elektrischen Spannung oder eines anderen gegebenen Parameters ergibt, und für die anderen—in der Folge mit 1 bezeichneten—zwei Pegeländerungen des Parameters regelmäßig zeitlich verteilt ergeben, wobei man die Realzeit jedes gelesenen Bits mißt und dieses Bit identifiziert, und wobei der Identifikationszeitpunkt jedes Bits nach maßgabe der Eigenheit und der Realzeitperiode $t_0$ des "vorangehenden Bits" gestellt wird, dadurch gekennzeichnet, daß man als Zeit T, welche das Leseende des "vorangehenden Bits" und den Identifikationszeitpunkt trennt,

—einen Wert $T_1$ nimmt, der zwischen 0,6 $t_0$ und 0,75 $t_0$, uusschließliche obere Grenze, liegt, wenn das vorangehende Bit eine 1 ist,

—einen Wert $T_0$=13/16 von $t_0$ nimmt, wenn das vorangehende Bit eine 0 ist und wenn das diesem vorangehende selbst eine 0 ist,

—einen Wert $t_0$=15/16 von $t_0$ nimmt, wenn das vorangehende Bit eine 0 ist und wenn das diesem vorangehende Bit eine 1 ist.

4. Verfahren zum Lesen nach einem der Ansprüche 1 bis 3, dadurch gekennzeichnet, daß $T_1$=5/8 von $t_0$ ist.

5. Verfahren zum Lesen nach einem der Ansprüche 1 bis 3, dadurch gekennzeichnet, daß $T_1$=11/16 von $t_0$ ist.

6. Vorrichtung zum Lesen zur Durchführung des Verfahrens nach Anspruch 1, welche eine Einrichtung zum Messen der Realzeitperiode jedes gelesenen Bits und eine Einrichtung zum Identifizieren dieses Bits aufweist, wobei der Zeitpunkt der Identifikation jedes Bits in Abhängigkeit von der Eigenheit und der Realzeitperiode $t_0$ des "vorangehenden Bits" gestellt wird, dadurch gekennzeichnet, daß die Regeleinrichtung derart betrieben wird, daß man als Zeit T, welche das Leseende dieses "vorangehenden Bits" und des Identifikationszeitpunkts trennt,

—einen Wert $T_1$ nimmt, der zwischen 0,6 und 0,75 $t_0$, ausschließliche obere Grenze, liegt, wenn das vorangehende Bit eine 1 ist,

—und einen Wert $T_0$ nimmt, der zwischen 0,75 und 0,9 $t_0$, ausschließliche untere Grenze, liegt, wenn das vorangehende Bit eine 0 ist.

7. Vorrichtung zum Lesen nach Anspruch 6, dadurch gekennzeichnet, daß $T_0$=7/8 von $t_0$ ist.

8. Vorrichtung zum Lesen zur Durchführung des Verfahrens nach Anspruch 3, welche eine Einrichtung zum Messen der Realzeitperiode jedes gelesenen Bits und ein Einrichtung zum Identifizieren dieses Bits aufweist, wobei die Identifikationszeit jedes Bits nach Maßgabe der Eigenheit und der Realzeitperiode $t_0$ des "vorangehenden Bits" gestellt wird, dadurch gekennzeichnet, daß die Einrichtung zum Regeln derart betrieben wird, daß man für die Zeit T, die das Leseende des "vorangehende Bits" und den Identifikationszeitpunkt trennt,

— einen Wert $T_1$ nimmt, der zwischen 0,6 und 0,75 $t_0$, ausschließliche obere Grenze, liegt, wenn das vorangehende Bit eine 1 ist,

— den Wert $T_0$ nimmt, der gleich 13/16 von $t_0$ ist, wenn das vorangehende Bit eine 0 ist und wenn das diesem vorangehende selbst eine 0 ist,

— und den Wert $T_0$ gleich 15/16 von $t_0$ nimmt, wenn das vorangehende Bit eine 0 ist und das diesem vorangehende eine 1 ist.

9. Vorrichtung zum Lesen nach einem der Ansprüche 6 bis 8, dadurch gekennzeichnet, daß $T_1$ gleich 5/8 von $t_0$ ist.

10. Vorrichtung zum Lesen nach einem der Ansprüche 6 bis 8, dadurch gekennzeichnet, daß $T_1$ gleich 11/16 von $t_0$ ist.

**Claims**

1. A process for reading, with a reading head, coded sequences of magnetic signals recorded on cards or similar carriers defiling in front of said head, which sequences are formed of bits which, at the time of an uniform defiling in front of the reading head, have identical durations and the readings of which result respectively, for some— —called 0 hereafter—by a single change of level of an electric voltage or other given parameter and, for the others—called 1 hereafter—by two changes of level of parameter regularly spaced apart in time, according to which the real duration of each bit is measured and said bit is identified, the time of identification for reading each bit being adjusted depending on the nature and on the real duration $t_0$ of the "preceding bit", characterized in that to time T which separates the end of reading of this "preceding bit" and said identification time is given:

— if the preceding bit is a 1, a value $T_1$ between 0.6 $t_0$ and 0.75 $t_0$, excluding the higher limit,

— and if said preceding bit is a 0, a value $T_0$ between 0.75 $t_0$ and 0.9 $t_0$, excluding the lower limit.

2. The reading process according to claim 1, characterized in that $T_0 = 7/8$ of $t_0$.

3. A process for reading, with a reading head, coded sequences of magnetic signals recorded on cards or similar carriers defiling in front of said head, which sequences are formed of bits which, at the time of an uniform defiling in front of the reading head, have identical durations and the readings of which result respectively, for some —called 0 hereafter—by a single change of level of an electric voltage or other given parameter and, for the others—called 1 hereafter—by two changes of level of parameter regularly spaced apart in time, according to which the real duration of each bit is measured and said bit is identified, the time of identification for reading each bit being adjusted depending on the nature and on the real duration $t_0$ of the "preceding bit", characterized in that to time T which separates the end of reading of this "preceding bit" and said identification time is given:

— if the preceding bit is a 1, a value $T_1$ between 0.6 $t_0$ and 0.75 $t_0$, excluding the higher limit,

— if said preceding bit is a 0 and if the bit preceding it is itself a 0, the value $T_0$ equal to 13/16 of $t_0$,

— and if said preceding bit is a 0 and if the bit preceding it is a 1, the value $T_0$ equal to 15/16 of $t_0$.

4. The reading process according to any one of the claims 1 to 3, characterized in that $T_1 = 5/8$ of $t_0$.

5. The reading process according to any one of the claims 1 to 3, characterized in that $T_1 = 11/16$ of $t_0$.

6. A reading apparatus for implementing the process according to claim 1, comprising means for measuring the real duration of each bit read and means for identifying said bit, the time of identification for reading each bit being adjusted depending on the nature and on the real duration $t_0$ to the "preceding bit", characterized in that the adjustment means are arranged so as to give to the time T separating the end of reading of this "preceding bit" and said identification time,

— if the preceding bit is a 1, a value $T_1$ between 0.6 $t_0$ and 0.75 $t_0$, excluding the higher limit,

— and if said preceding bit is a 0, a value $T_0$ between 0.75 $t_0$ and 0.9 $t_0$, excluding the lower limit.

7. The reading apparatus according to claim 6, characterized in that $T_0$ is equal to 7/8 of $t_0$.

8. A reading apparatus for implementing the process according to claim 3, comprising means for measuring the real duration of each bit read and means for identifying said bit, the time of identification for reading each bit being adjusted depending on the nature and on the real duration $t_0$ to the "preceding bit", characterized in that the adjustment means are arranged so as to give to the time T separating the end of reading of this "preceding bit" and said identification time,

— if the preceding bit is a 1, a value $T_1$ between 0.6 $t_0$ and 0.75 $t_0$, excluding the higher limit,

— if said preceding bit is a 0 and if the bit preceding it is itself a 0, the value $T_0$ equal to 13/16 of $t_0$,

— and if said preceding bit is a 0 and if the bit preceding it is a 1, the value $T_0$ equal to 15/16 of $t_0$.

9. The reading apparatus according to any one of the claims 6 to 8, characterized in that $T_1$ is equal to 5/8 of $t_0$.

10. The reading apparatus according to any one of the claims 6 to 8, characterized in that $T_1$ is equal to 11/16 of $t_0$.